# EUROPÄISCHE PATENTANMELDUNG

(11) **EP 3 984 927 A1**
(43) Veröffentlichungstag der Anmeldung: **20.04.2022**
(21) Anmeldenummer: 21000152.5
(22) Anmeldetag: 09.06.2021
(51) Int. Cl.: B65G 65/00, B62D 65/02, B65G 47/88, B65G 1/04

(54) **LAGER- UND TRANSPORTVORRICHTUNG**

(30) Priorität: 16.10.2020 DE 202020004359 U
(71) Anmelder: Olaf und Andre Tünkers GBR, 40880 Ratingen (DE)
(72) Erfinder: DALL, Ralf Dipl.-Ing. (FH), 40885 Ratingen (DE)
(74) Vertreter: Beyer, Rudi

(57) **Zusammenfassung**

Die Erfindung betrifft eine Lager- und Transportvorrichtung mit einem fahrerlosen, mit motorischem Eigenantrieb ausgerüsteten, gegebenenfalls programmierbaren, selbstfahrenden Transportfahrzeug (2). Das Lagergestell weist eine von seiner Ladefläche nach oben abstehende und durch das Transportfahrzeug (2) durch Berührung vertikal verstellbare Rücklaufsperre (8) auf. Die Rücklaufsperre ist über ein Getriebe aufstellbar und absenkbar. Somit wird in ihrer aufgerichteten Stellung ein unbeabsichtigtes Herunterbewegen der Last vom Bahnhof (3) verhindert. Es wird aufgezeigt, wie bei einem solchen Fahrzeug das Ein- und Ausschalten der Rücklaufsperre (8) gefahrlos betätigt werden kann, ohne dass ein manueller Eingriff erforderlich ist.

## Beschreibung

### Gattung

Die Erfindung betrifft eine Lager- und Transportvorrichtung mit einem fahrerlosen, mit motorischem Eigenantrieb ausgerüsteten, gegebenenfalls programmierbaren, selbstfahrenden Transportfahrzeug zum Transportieren von stückigen Gütern.

### Stand der Technik

Bekannt sind herkömmliche Rücklaufsperren für Behälter, wie sie zum Beispiel in der Automobilindustrie zur Anwendung kommen. Hier wird der Behälter händisch von einem Routenzug auf einen Übergabebahnhof oder Hubneigegerät geschoben. Dabei drückt der Behälter über ein abgeschrägtes Blech eine Rücklaufsperre bei der Übergabe nach unten. Sobald der Behälter oder Container vollständig auf dem Gerät ist, also die Rücklaufsperre komplett passiert hat, fährt diese mit Hilfe von Federkraft wieder nach oben. Nun verhindert ein senkrechtes Blech, dass der Container wieder zurückrollen kann. Er ist sicher auf dem Gerät fixiert und der Werker kann nun gefahrlos den Container entladen.

Wenn der Container entleert ist und wieder abgeholt wird, kann der Werker die Rücklaufsperre oder Fußraste mit einem Fuß nach unten drücken, wodurch der Container wieder frei beweglich ist. Er kann wieder auf den Routenzug gezogen und abtransportiert werden.

### Aufgabe

Der Erfindung liegt die Aufgabe zugrunde, eine Lager- und Transportvorrichtung zu schaffen, bei welcher bei einem fahrerlosen, mit motorischen Antrieb ausgerüsten, gegebenenfalls programmieren und selbstfahrenden Transportfahrzeug eine sichere Rücklaufsperre gegebenenfalls auch manuell betätigt werden kann.

### Lösung der Aufgabe

Diese Aufgabe wird durch eine Lager- und Transportvorrichtung, mit einem fahrerlosen, mit motorischem Eigenantrieb ausgerüsteten, gegebenenfalls programmierbaren, selbstfahrenden Transportfahrzeug zum Transportieren von stückigen Gütern, insbesondere von Bauteilen im Karosseriebau der Kfz-Industrie gelöst, die das Transportfahrzeug auf seine zum Beispiel mit Rollen ausgerüstete Ladefläche selbsttätig auflädt und auf ein zugeordnetes als Bahnhof ausgebildetes Lagergestell oder Magazin entlädt, das eine von seiner Ladefläche nach oben abstehende manuell und/oder durch das Transportfahrzeug durch Berührung vertikal verstellbare Rücklaufsperre aufweist, die von der Last im abgesenkten Zustand überfahrbar ist und die über ein Getriebe aufstellbar und absenkbar ist und in aufgerichteter Stellung ein unbeabsichtigtes Herunterbewegen der Last vom Bahnhof verhindert.

### Einige Vorteile

Bei der erfindungsgemäßen Lager- und Transportvorrichtung kann ein selbstfahrendes Fahrzeug gemäß der vorausgesetzten Gattung das Ein- und Ausschalten der Rücklaufsperre gefahrlos betätigen, ohne dass ein manueller Eingriff erforderlich ist. Allerdings besteht die Möglichkeit, die Rücklaufsperre im Bedarfsfalle auch manuell ein- und auszuschalten, falls dies aus irgendeinem Grunde erforderlich sein sollte. Im abgesenkten Zustand überfährt die Palette mit der Last oder die Last selbst die abgesenkte Rücklaufsperre. Entfernt sich das selbstfahrende Transportfahrzeug wieder, fährt die Rücklaufsperre ohne manuellen Eingriff wieder in ihre Blockierstellung nach oben hoch und verhindert auf diese Art und Weise ein unbeabsichtigtes Herunterbewegen der Last oder der Palette vom Bahnhof. Der Bahnhof kann als Gestell ausgebildet sein.

### Weitere erfinderische Ausgestaltungen

Weitere erfinderische Ausgestaltungen sind in den **Patentansprüchen 2** bis **10** beschrieben.

In **Patentanspruch 2** ist eine Lager- und Transportvorrichtung beschrieben, bei welcher der Bahnhof an seiner dem Transportfahrzeug zugekehrten Stirnseite eine Schaltvorrichtung mit einem Strukturdämpfungskörper aufweist, der einen gummiartige Eigenschaften aufweisenden abgerundeten oder kugelförmigen oder konvexen, in Richtung auf das Transportfahrzeug hervorragenden Oberflächenabschnitt aufweist, gegen den das Transportfahrzeug mit einem zugeordneten Abschnitt einer Seitenfläche einwirkt und die Rücklaufsperre dadurch in abgesenkter Stellung steuert, oder dass die Rücklaufsperre durch einen manuell betätigbaren Schalter steuerbar ist. Ungenauigkeiten von +/- 10 Millimeter beim Heranfahren des Transportfahrzeuges durch ungenaue Navigation könnten normalerweise die Rücklaufsperre komplett gedrückt werden und beim nächsten Mal zu wenig. Zusammen mit den Maßtoleranzen eines Containers bzw. einer Palette könnte so die Funktionssicherheit der Ver-/Entriegelung erheblich beeinträchtigt werden. Aus diesem Grunde ist an der erfindungsgemäßen Rücklaufsperre ein Strukturdämpfer angebracht, der beim Heranfahren des Transportfahrzeuges gegen diesen Strukturdämpfer fährt und diesen leicht flexibel eindrückt. Sobald die Kraft erreicht ist, die zum Betätigen der Rücklaufsperre erforderlich ist, fährt die Rücklaufsperre beim weiteren Heranfahren nach unten. Wenn die Rücklaufsperre vollständig nach unten gefahren ist, wird das unter Umständen sich um einen geringen Betrag weiter bewegende Transportfahrzeug flexibel verformen, was keinen schädigen Eingriff auf die Funktion hat. Insgesamt wird dadurch die Funktionssicherheit der Rücklaufsperre erhöht, auch bei ungenauer Navigation des Transportfahrzeuges. Beschädigungen der Rücklaufsperre durch ein zu weit heranfahrendes Transportfahrzeug sind ausgeschlossen, da der Dämpfer lediglich elastisch verformt wird, während schädigende Kräfte auf die Mechanik der Rücklaufsperre ausgeschlossen sind. Durch die besondere Form des Strukturdämpfers kann das Transportfahrzeug auch in einem Winkel durch ungenaue Navigation heranfahren und eine sichere Funktion der Rücklaufsperre bewirken.

In **Patentanspruch 3** ist eine Lager- und Transportvorrichtung beschrieben, die dadurch gekennzeichnet ist, dass dem Strukturdämpfungskörper eine oder mehrere parallel zueinander angeordnete, gleich große und gleich ausgebildete und gleichsinnig sich bewegende Stange oder Stangen mit Verzahnungen zugeordnet ist bzw. sind, die die Bewegung des Strukturdämpfungskörpers beim Anstoßen des Transportfahrzeuges über zugeordnete Zahnritzel, eine horizontal angeordnete Welle und dieser endseitig zugeordnete Ritzel überträgt, die ihrerseits mit Ritzel kämmen, die die Drehbewegung auf jeweils einem vertikal angeordneten Bolzen übertragen, die die Drehbewegung der Ritzel aus einer horizontalen Ebene in eine vertikale Hubbewegung in Richtung übertragen und dadurch die Rücklaufsperre entweder in abgesenkter Stellung oder in eine die Blockierstellung definierende Hubrichtung steuern. Hierdurch ergibt sich eine zuverlässige, robuste Konstruktion, die eine genaue Steuerung der Rücklaufsperre ermöglicht.

**Patentanspruch 4** beschreibt eine Lager- und Transportvorrichtung, die dadurch gekennzeichnet ist, dass den verzahnten Bolzen jeweils ein Körper zugeordnet ist, der den betreffenden Bolzen übergreift, wobei dem Körper an seiner Oberseite ein Blechkörper zugeordnet ist, der eine in Richtung auf das Transportfahrzeug unter einem spitzen Winkel zur Horizontalen geneigte Oberfläche aufweist, auf die die Last bzw. die die Last tragende Palette aufgleiten kann. Die besondere Ausführung der Rücklaufsperre mit dem Blechkörper ermöglicht es, dass die Last bzw. eine Palette mit Last die Rücklaufsperre in ihrem angesenkten Zustand ohne hängen zu bleiben überfahren kann, da das Überfahren durch die Neigung der Oberfläche des Blechkörpers erleichtert ist.

**Patentanspruch 5** beschreibt eine Lager- und Transportvorrichtung, die dadurch gekennzeichnet ist, dass der Rücklaufsperre an jedem Endbereich ein gegen die Rückstellkraft einer vorgespannten Druckfeder angeordneter Bolzen zugeordnet ist, der den Blechkörper in vertikaler Richtung abstützt und den Blechkörper nach Wegfall einer entweder manuellen oder durch das Transportfahrzeug auf den Strukturdämpfungskörper ausgelösten Schaltfunktion wieder in seine Blockierstellung nach oben drückt. Dies ermöglicht eine einfache, robuste Konstruktion, die auch nach vielen Lastwechseln zuverlässig arbeitet.

In **Patentanspruch 6** ist eine Lager- und Transportvorrichtung beschrieben, die dadurch gekennzeichnet ist, dass der Blechkörper an seinem dem Transportfahrzeug zugekehrten Ende einen abgekröpften Aufschnitt aufweist, der nach unten gerichtet ist und sich über einen Schenkel des Betätigungskörpers und dieser wiederum gegen den die verzahnten Bolzen übergreifenden Körper abstützt. Hierdurch werden die verzahnten Bolzen zuverlässig gegen Beschädigungen und Verschmutzungen geschützt.

Gemäß **Patentanspruch 7** ist eine Lager- und Transportvorrichtung dadurch gekennzeichnet, dass der Blechkörper (9) an seinem dem Transportfahrzeug abgekehrten Ende mit einem abgekröpften Endabschnitt flächig auf einem Betätigungskörper aufliegt und mit diesem verbunden ist. Dies ergibt eine Konstruktion mit wenigen Einzelteilen.

Die Lager- und Transportvorrichtung nach **Patentanspruch 8** ist dadurch gekennzeichnet, dass der Betätigungskörper über eine Schraube mit dem jeweils zugeordneten verzahnten Bolzen lösbar verbunden ist. Hierdurch lassen sich die Einzelteile leicht montieren und im Bedarfsfalle auch demontieren, zum Beispiel bei etwaigen Reparaturen und Überholungsarbeiten.

In **Patentanspruch 9** ist eine Lager- und Transportvorrichtung dadurch gekennzeichnet, dass die Hubbewegungen der verzahnten Stangen einerseits und die Hubbewegungen der verzahnten Bolzen andererseits entsprechend der vertikalen Hubbewegung der Rücklaufsperre begrenzt sind. Durch die Verzahnung einerseits und die Übertragung der Stoßbewegung der Transportvorrichtung auf Wellen und mit Ritzeln arbeitenden Getrieben andererseits ergibt sich eine exakte Hubbewegung der Rücklaufsperre.

In **Patentanspruch 10** ist eine Lager- und Transportvorrichtung beschrieben, die dadurch gekennzeichnet ist, dass der Strukturdämpfungskörper in einem mittig an einer Stirnseite des Bahnhofs zusammen mit den verzahnten Stangen unterhalb der Ladefläche des Bahnhofs angeordnet ist. Die mittige Anordnung des Strukturdämpfungskörpers ermöglicht ein zielgerichtetes Heranfahren der Transportvorrichtung, die auch für die Übergabe der Last am Bahnhof erforderlich ist.

In der Zeichnung ist die Erfindung - teils schematisch - beispielsweise veranschaulicht. Es zeigen:
- Fig. 1: Ein fahrerloses Transportfahrzeug mit Elektroantrieb und einer wiederaufladbaren Batterie versehen fährt mit einem rahmenartigen Container, der zum Aufnehmen von Bauteilen, zum Beispiel von blechförmigen Bauteilen im Karosseriebau der Kfz-Industrie, dient, zu einem als Bahnhof ausgebildeten rahmenartigen Lagergestell oder Magazin;
- Fig. 2: zeigt das fahrerlose Transportfahrzeug, wie es an dem Bahnhof herangefahren ist und eine Rücklaufsperre durch Gegenfahren betätigt;
- Fig. 3: das fahrerlose Transportfahrzeug in einer Darstellung, in der es noch näher an dem Bahnhof herangefahren ist und dabei lediglich einen als Strukturdämpfer ausgebildeten Schalter weiter verformt hat, wobei der Strukturdämpfer die von dem fahrerlosen Fahrzeug ausgehenden Stoßkräfte weitgehend vom Bahnhof dämpft;
- Fig. 4: ein Kettenförderer des fahrerlosen Transportfahrzeuges, das links und rechts der Rücklaufsperre angeordnet ist, fährt heraus, um die auf dem Transportfahrzeug befindliche rahmenartige Palette herauszuziehen und auf dem Bahnhof abzuladen;
- Fig. 5: das fahrerlose Transportfahrzeug hat den rahmenartigen Container auf dem Bahnhof bei gedrücktem Strukturdämpfer gefördert;
- Fig. 6: eine Einzelheit aus Fig. 5 im Kreis, teils abgebrochen dargestellt und im größeren Maßstab;
- Fig. 7: das fahrerlose Transportfahrzeug hat sich wieder entfernt und die Rücklaufsperre hat sich nach oben bewegt und blockiert die Palette, während ein Werker sich im Bereich des Bahnhofs aufhält, um ein nicht dargestelltes Bauteil von der Palette zu entnehmen;
- Fig. 8: eine Einzelheit aus Fig. 7 im Kreis, abgebrochen dargestellt und im größeren Maßstab;

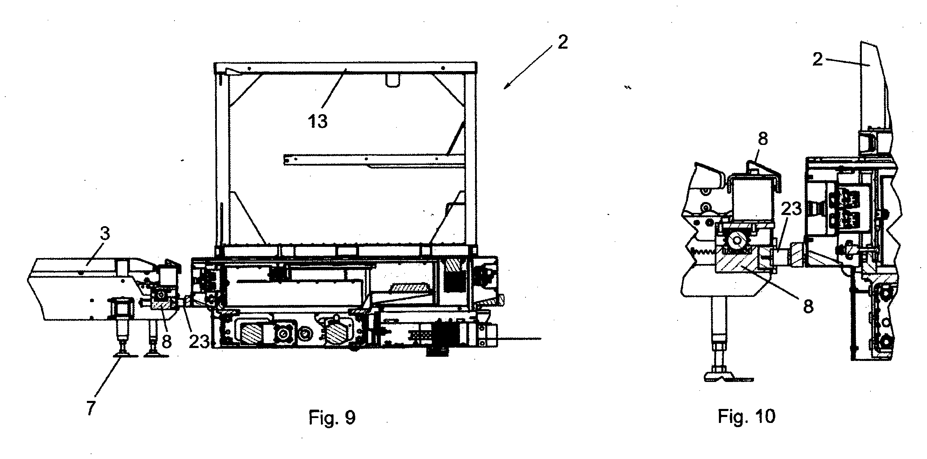

- Fig. 9: eine teilweise Seitenansicht zu Fig. 2, teils abgebrochen darstellt, teils im Schnitt in der Stellung, in der das fahrerlose Transportfahrzeug den verformbaren Strukturdämpfer betätigt und sich eine Palette auf dem Transportfahrzeug befindet;
- Fig. 10: eine Einzelheit aus Fig. 9 im größeren Maßstab, abgebrochen darstellt und im größeren Maßstab, teils im Schnitt bei betätigtem Strukturdämpfer durch das Transportfahrzeug;
- Fig. 11: eine Draufsicht zu Fig. 9, teils abgebrochen darstellt, in anderem Maßstab, bei der das fahrerlose Fahrzeug den verformbaren Strukturdämpfer der Rücklaufsperre betätigt hat und die Rücklaufsperre hat sich nach unten bewegt;
- Fig. 12: eine ähnliche Draufsicht wie in Fig. 11, wobei der Strukturdämpfer verformt wurde, um Navigationsungenauigkeiten auszugleichen, abgebrochen dargestellt;

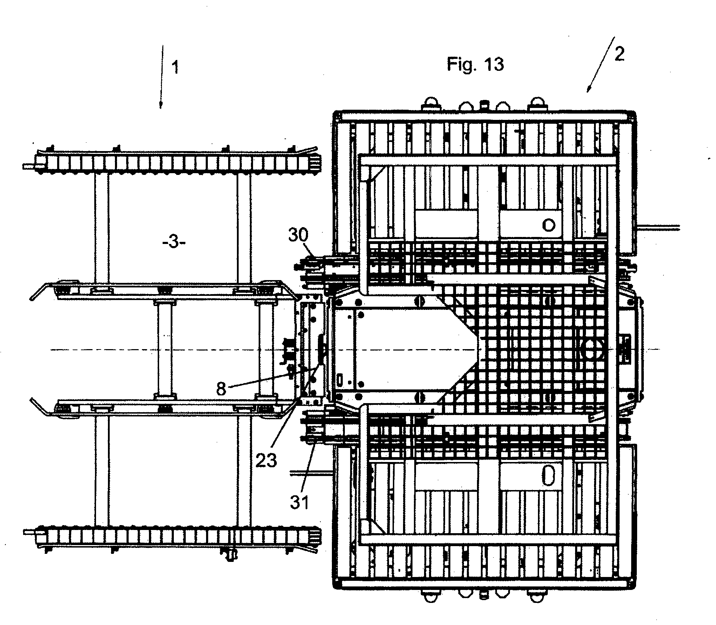

- Fig. 13: eine ähnliche Darstellung wie in Fig. 12, wobei allerdings die beiden Kettenförderer motorisch ausgefahren dargestellt sind;

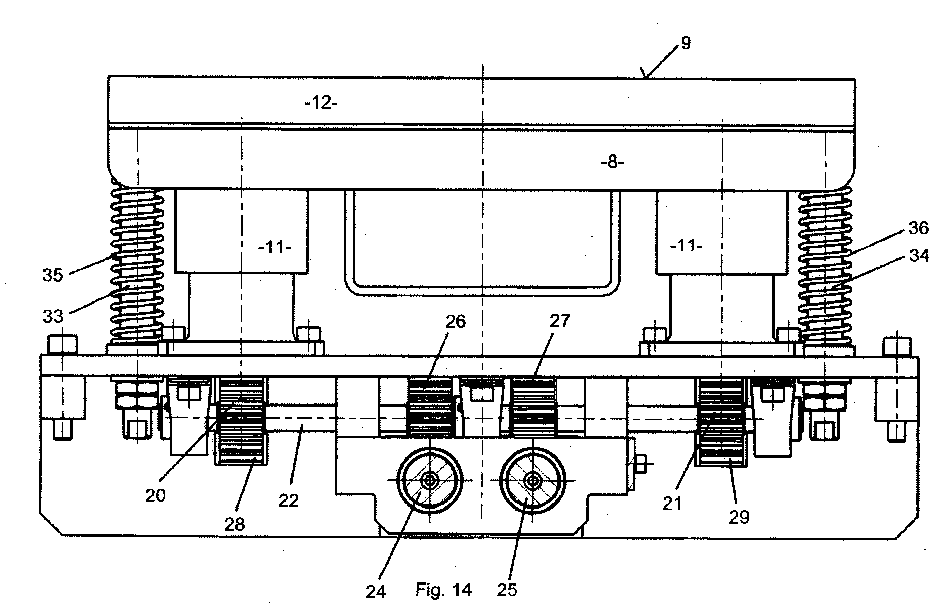

- Fig. 14: eine Stirnansicht auf die Rücklaufsperre, teils abgebrochen dargestellt, in anderem Maßstab, mit Getriebeanordnung zum Betätigen der Rücklaufsperre;
- Fig. 15: eine Stirnansicht auf die Rücklaufsperre;
- Fig. 16: eine Einzelheit aus der Getriebeanordnung für die Rücklaufsperre, teils im Schnitt, im anderen Maßstab, und
- Fig. 17: eine weitere Einzelheit aus der Getriebeanordnung für die Höhenverstellbarkeit der Rücklaufsperre, teils im Schnitt.

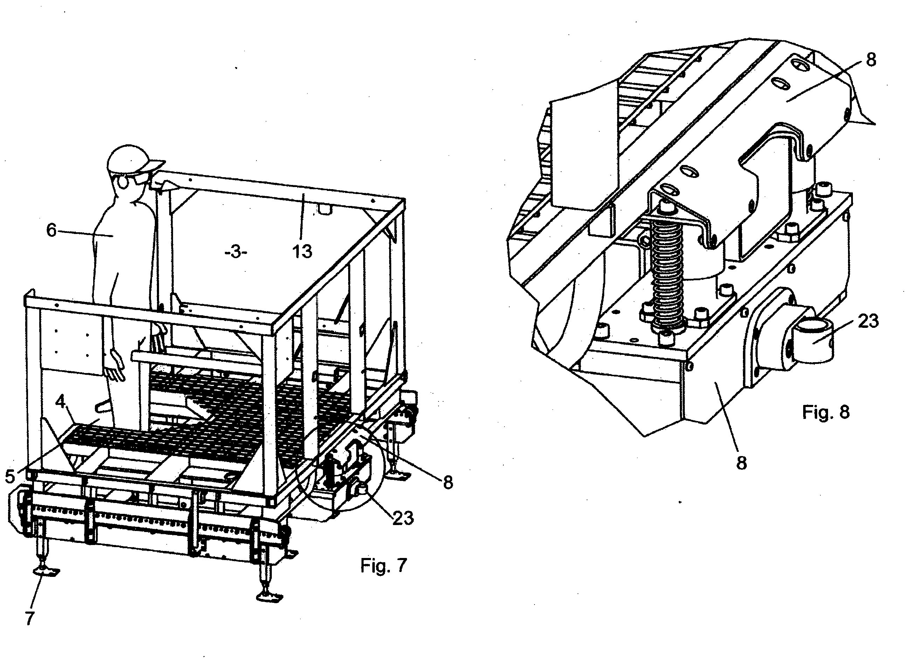

In der Zeichnung ist mit dem Bezugszeichen 1 eine Lager- und Transportvorrichtung bezeichnet. Dargestellt ist ein fahrerloses mit elektrischem Eigenantrieb ausgerüstetes Transportfahrzeug 2 und ein als Bahnhof ausgebildetes magazinartiges Lagergestell 3, das an seiner oberen Lagerfläche mit in Wälzlagern gelagerten Rollen oder Walzen 4 versehen ist. Die Lagerfläche weist zum Beispiel eine Aussparung 5 auf, in die ein Werker 6 (Fig. 7) eintreten kann, um beispielsweise die Last, die von dem Transportfahrzeug 2 zum Bahnhof 3 herangefördert wird, in Empfang zu nehmen und handzuhaben.

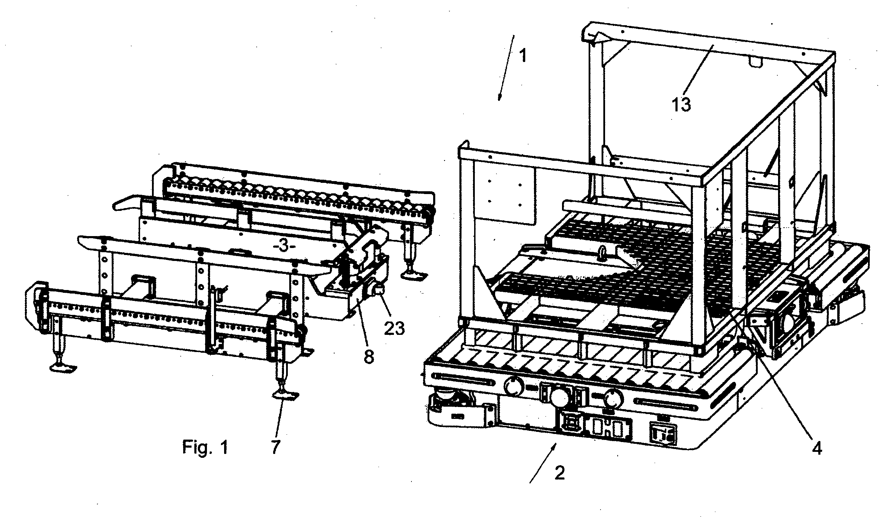

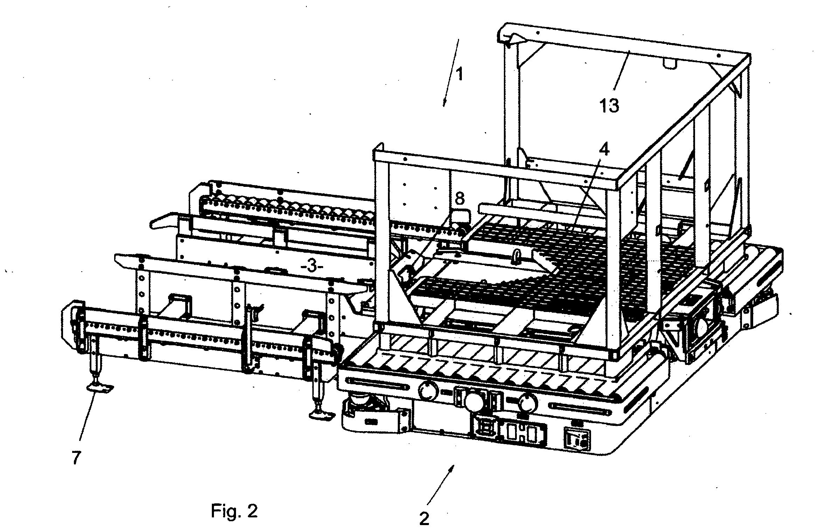

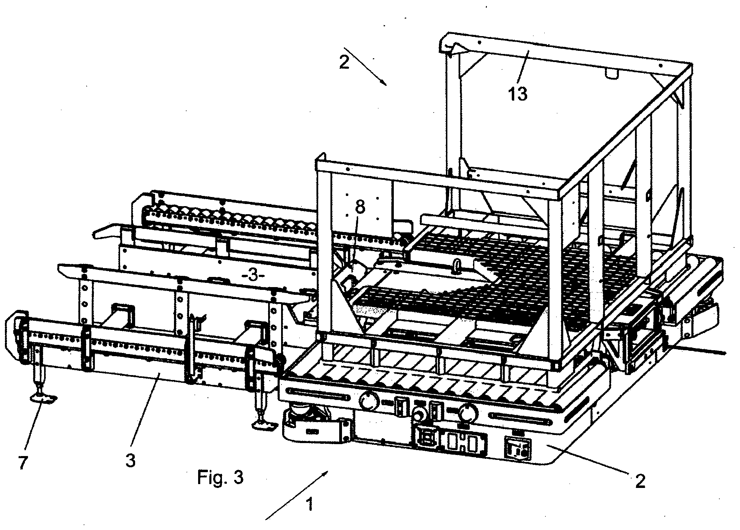

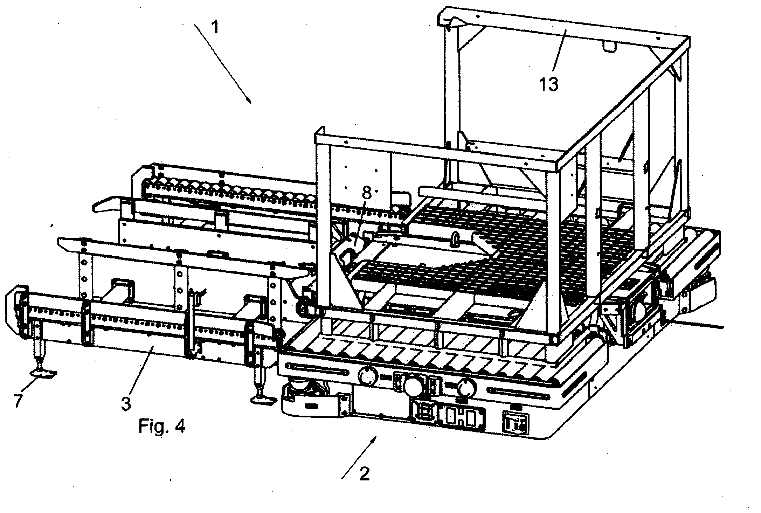

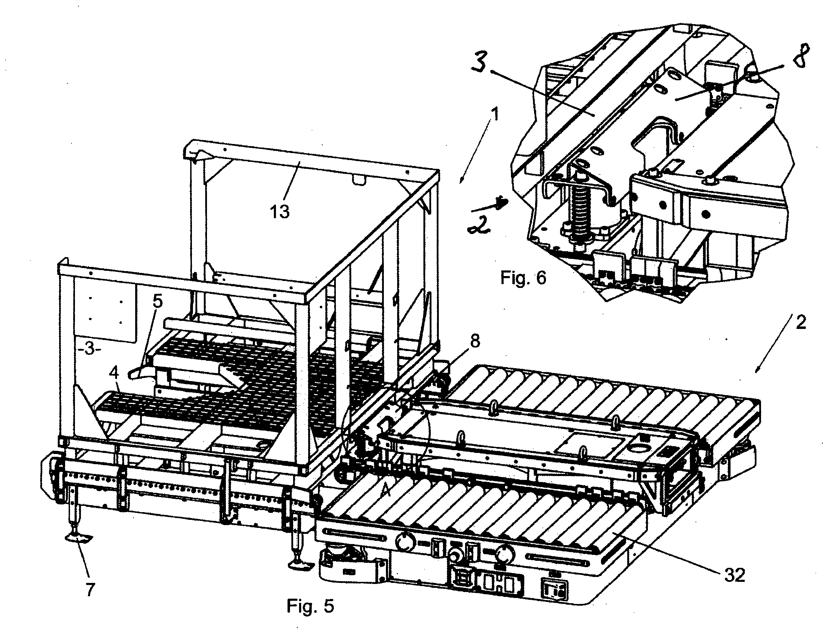

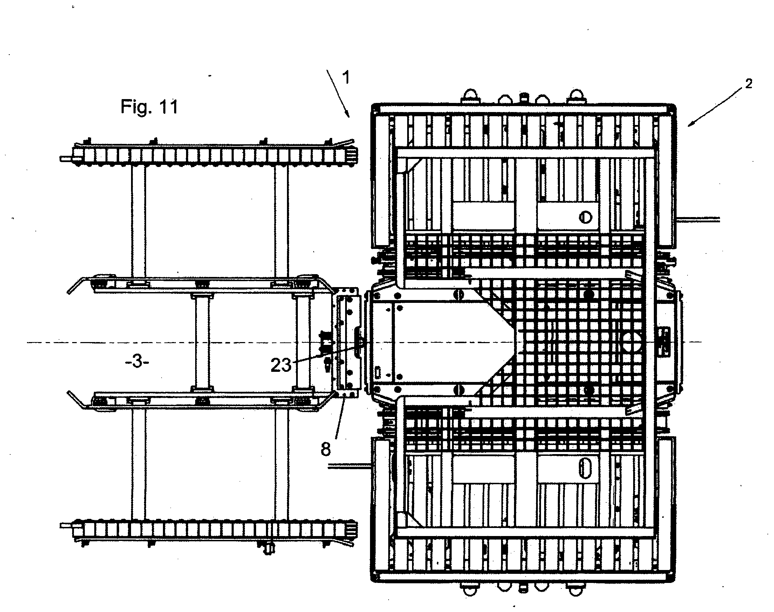

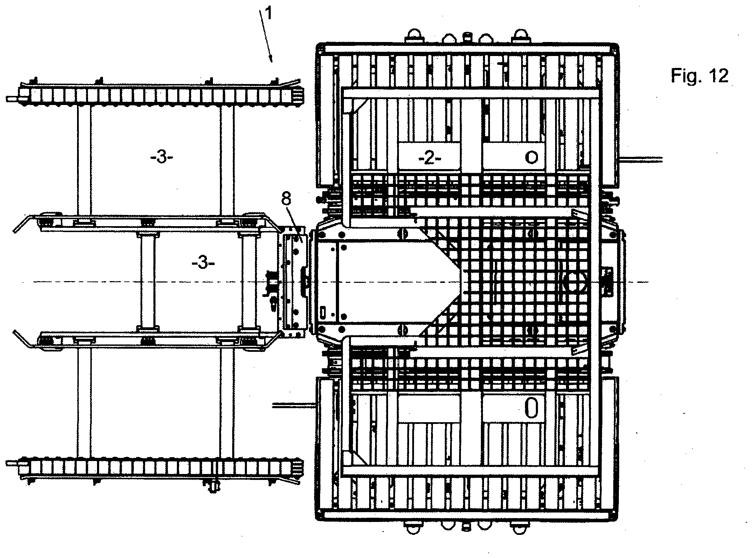

Das Transportfahrzeug 2 besitzt eine wiederaufladbare Batterie (nicht dargestellt) zur Energieversorgung des motorischen Antriebs des Transportfahrzeuges 2 und an seiner Peripherie verschiedene Sensoren und ist für den jeweiligen Einsatzfall hinsichtlich seiner Bewegungsmöglichkeiten programmierbar und/oder auch fernsteuerbar, kann jedoch über einen Notschalter auch manuell stillgesetzt und gegebenenfalls auch wieder in Gang gesetzt werden. Das Transportfahrzeug 2 kann Stückgüter, insbesondere blechförmige Bauteile im Karosseriebau der Kfz-Industrie nicht nur in Hallen, sondern auch zwischen Hallen, also über größere Entfernungen selbsttätig und fahrerlos transportieren. Wie man im Übrigen erkennt, kann der Bahnhof 3 verschiedene Konfigurationen aufweisen, ist aber in der Regel auf dem Aufstellboden unbeweglich angeordnet, zum Beispiel über einstellbare Stützen 7 gelagert. Bei den aus den Fig. 5 und 7 ersichtlichen Ausführungsformen besitzt der Bahnhof 3 die Aussparung, 5 während er bei den Ausführungsformen gemäß Fig. 1, 2, 3, 4, 11 und 12 an den Außenseiten Wälzkörper aufweist, auf die die Last abgeschoben werden kann.

Der Bahnhof 3 weist an seiner dem Transportfahrzeug 2 zugekehrten Stirnseite eine insgesamt mit dem Bezugszeichen 8 bezeichnete Rücklaufsperre auf, die das unbeabsichtigte Bewegen von Lasten der Ladefläche des Bahnhofs 3 und damit auch Unfälle, verhindern soll.

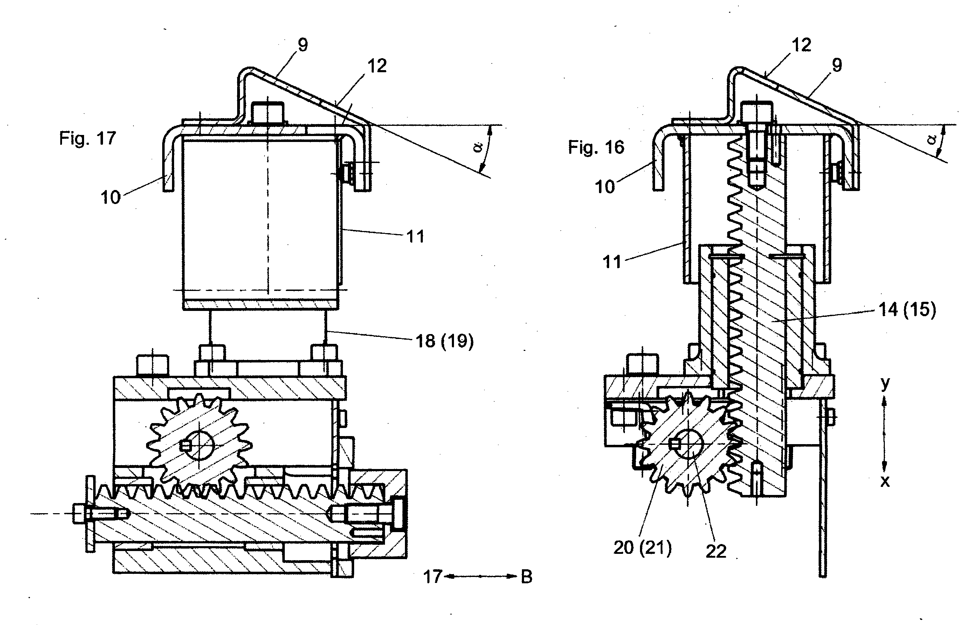

Die Rücklaufsperre 8 weist einen in vertikaler Richtung X - Y (Fig. 16) verstellbaren leistenförmigen, strukturierten Blechkörper 9 (Fig. 16) auf, dem ein Betätigungskörper 10 aus einem U-förmig gebogenen Blechkörper 9 zugeordnet ist, der seinerseits auf einem Körper 11 befestigt ist und mit diesem Richtung X bzw. Y zusammen mit dem Blechkörper 9 um ein begrenztes Maß vertikal hubbeweglich ist.

Der Blechkörper 9 besitzt eine als Anlauffläche ausgebildete Oberfläche 12 (Fig. 16, 17), die in Richtung auf das Transportfahrzeug 12 unter einem spitzen Winkel α geneigt in Richtung auf den Bahnhof 3 ansteigend nach oben verläuft, auf die die von dem Transportfahrzeug 2 transportierte Last bzw. das aus der Zeichnung ersichtliche, vorliegend als Rahmen ausgebildete palettenförmige Transportgestell 13 durch die Kettenförderer des Transportfahrzeuges 2 motorisch aufgeschoben werden kann. Das Transportgestell 13 dient zum Befördern der blechförmigen Bauteilen oder dergleichen, vornehmlich im Karosseriebau der Kfz-Industrie.

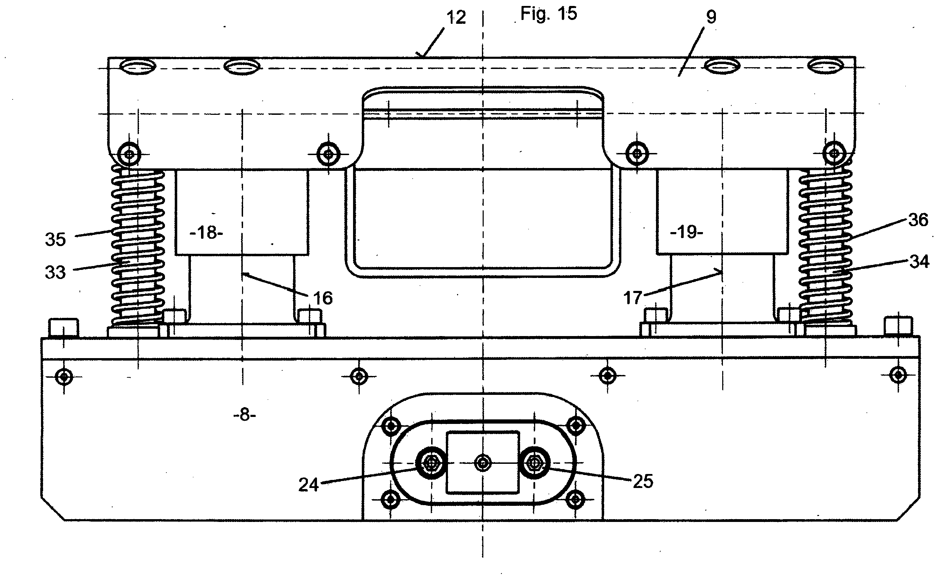

Beim Auflaufen der Last auf den Blechkörper 9 wird dieser nach unten, mithin in Richtung X (Fig. 16) gedrückt, wobei sich der Körper 11 über zwei mit Abstand zueinander angeordnete verzahnte Bolzen 14, 15 (Fig. 16) abstützt, von denen in Fig. 15 lediglich die beiden Mittellinien 16, 17 dargestellt sind, die in einem Lagergehäuse 18, 19 angeordnet sind. Ein Bolzen 14 ist aus Fig. 16 ersichtlich.

Die verzahnten Bolzen 14 und 15 kämmen jeweils mit einem Ritzel 20 bzw. 21, die über eine Welle 22 getrieblich miteinander verbunden sind. Im mittleren Breitenbereich des Bahnhofs 3 ist an der dem Transportfahrzeug 2 zugekehrten Seite der Rücklaufsperre 8 ein begrenzt flexibel verformbarer Strukturdämpfungskörper 23 aus einem gummielastische Eigenschaften aufweisenden Kunststoff, beispielsweise aus Polyurethan, angeordnet, dem zwei parallel und mit Abstand zueinander angeordnete, gleich große und gleich verzahnte Stangen 24, 25 zugeordnet sind, die mit ihren Verzahnungen mit zwei gleich großen Ritzeln 26, 27 kämmen und dadurch die synchrone, gleich gerichtete und gleichsinnige Bewegung der Stangen 24, 25 beim Einwirken des Transportfahrzeuges 2 auf den Strukturdämpfungskörper 23 über die Ritzel 26, 27 die Drehbewegung auf die Welle 22 und auf Ritzel 28, 29 gleichsinnig und synchron übertragen, die ihrerseits ihre Drehbewegung auf die Ritzel 20, 21 und damit die verzahnten Bolzen 14, 15 synchron übertragen und diese gleichgerichtet und synchron in Richtung X oder Y antreiben, je nachdem, ob der Strukturdämpfungskörper 23 durch das Transportfahrzeug 2 beaufschlagt wird oder nicht.

Der Strukturdämpfungskörper 23 ist in Richtung auf das Transportfahrzeug 2 nach Vorne vorspringend gewölbt, insbesondere konvex, ausgebildet, so dass auch exzentrische, also nicht genau in der Längsmitte des Bahnhofs verlaufende Stöße gegen den Strukturdämpfungskörper 23 sich nicht schädlich auswirken können. Ungenauigkeiten von z. B. +/- 10 mm beim Heranfahren des Transportfahrzeuges 2 können somit die Funktionssicherheit der Rücklaufsperre 8 nicht beeinträchtigen.

Stößt das Transportfahrzeug 2 gegen den Strukturdämpfungskörper 23 an, werden somit die verzahnten Stangen 24 und 25 synchron und um den gleichen Betrag verschoben, was über die Ritzel 26, 27 auf die Welle 22 und damit auf die Ritzel 28, 29 und die Ritzel 20, 21 und auf die verzahnten Bolzen 14, 15 im Sinne einer entsprechenden Hubbewegung in Richtung X übertragen wird. Das heißt, der Blechkörper 9 wird zusammen mit dem Körper 11 und den Bolzen 14, 15 nach unten bewegt, so dass das Transportgestell 13, zum Beispiel eine Palette mit Last durch motorisch angetriebene Kettenförderer 30, 31 auf die entsprechenden Rollen oder Walzen des Bahnhofs 3 aufgeschoben oder mittels Klinkengesperre eine dort gelagerte Last, beispielsweise ein Transportgestell mit blechförmigen Bauteilen für den Karosseriebau, wieder auf die Rollen 32 des Transportfahrzeuges 2 herausgezogen/bewegt werden kann.

Dem Blechkörper 9 sind mit Abstand zueinander im Endbereich je ein Bolzen 33, 34 zugeordnet. Der Blechkörper 9 ist mit seinen übrigen zugeordneten Teilen gegen die Rückstellkraft der beiden Druckfedern 35, 36 in Richtung X (Fig. 16) beweglich, wobei die Bolzen 33 und 34 zum Beispiel als Führungen dienen.

Ist eine Last auf einem Bahnhof 3 aufgeschoben worden, entfällt die Druckkraft auf die schräge Oberfläche 12 des Blechkörpers 9. Entfernt sich dann außerdem das Transportfahrzeug 2 von dem Strukturdämpfungskörper 23, drücken die Druckfedern 35, 36 den Blechkörper 9 wieder in Richtung Y nach oben, wobei dies auch über die verzahnten Bolzen 14, 15 auf die Ritzel 20, 21 und damit auch über die Ritzel 28, 29 auf die Welle 22 und die Ritzel 26, 27 und die verzahnten Stangen 14, 15 übertragen wird, was auch wiederum eine Bewegung des Strukturdämpfungskörpers 23 in seine Ausgangsposition/Blockierposition bewirkt.

Wenn der Blechkörper 9 nach Wegfall seiner Beanspruchung in Richtung X sich wieder in seine obere Stellung in Richtung Y bewegt hat, verhindert er zuverlässig ein unbeabsichtigtes Herausbewegen einer Palette mit Last aus/von dem Bahnhofs 3.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Lager- und Transportvorrichtung
- 2: Transportfahrzeug
- 3: Bahnhof, Magazin, Lagergestell
- 4: Rollen, Walzen
- 5: Aussparung
- 6: Handwerker
- 7: Stützen
- 8: Rücklaufsperre
- 9: Blechkörper
- 10: Betätigungskörper
- 11: Körper
- 12: Oberfläche
- 13: Transportgestell, Palette
- 14: Bolzen, verzahnter
- 15: " , "
- 16: Mittellinie
- 17: "
- 18: Lagergehäuse
- 19: " 1
- 20: Ritzel
- 21: "
- 22: Welle
- 23: Strukturdämpfungskörper
- 24: Stange
- 25: "
- 26: Ritzel
- 27: "
- 28: "
- 29: "
- 30: Kettenförderer
- 31: "
- 32: Rollen
- 33: Bolzen
- 34: "
- 35: Druckfeder
- 36: "

- X: Hubbewegung des Blechkörpers 9
- Y: " " "
- α: " " "

## Patentansprüche

1. Lager- und Transportvorrichtung (1), mit einem fahrerlosen, mit motorischem Eigenantrieb ausgerüsteten, gegebenenfalls programmierbaren, selbstfahrenden Transportfahrzeug (2) zum Transportieren von stückigen Gütern, insbesondere von Bauteilen im Karosseriebau der Kfz-Industrie, die das Transportfahrzeug (2) auf seine zum Beispiel mit Rollen (32) ausgerüstete Ladefläche selbsttätig auflädt und auf ein zugeordnetes als Bahnhof (3) ausgebildetes Lagergestell oder Magazin entlädt, das eine von seiner Ladefläche nach oben abstehende manuell und/oder durch das Transportfahrzeug (2) durch Berührung vertikal verstellbare Rücklaufsperre (8) aufweist, die von der Last im abgesenkten Zustand überfahrbar ist und die über ein Getriebe aufstellbar und absenkbar ist und in aufgerichteter Stellung ein unbeabsichtigtes Herunterbewegen der Last vom Bahnhof (3) verhindert.

2. Lager- und Transportvorrichtung nach Anspruch 1, **dadurch gekennzeichnet, dass** der Bahnhof (3) an seiner dem Transportfahrzeug (2) zugekehrten Stirnseite eine Schaltvorrichtung mit einem Strukturdämpfungskörper (23) aufweist, der zum Beispiel aus einem Co-Polyester-Elastomer besteht mit langer und weicher Abbremsung, mit einem progressiven Energieabbau am Hubende, wobei der Strukturdämpfungskörper (23) einen abgerundeten oder kugelförmigen oder konvexen, in Richtung auf das Transportfahrzeug (2) hervorragenden Oberflächenabschnitt aufweist, gegen den das Transportfahrzeug (2) mit einem zugeordneten Abschnitt einer Seitenfläche einwirkt und die Rücklaufsperre dadurch in abgesenkter Stellung steuert, oder dass die Rücklaufsperre (8) zusätzlich durch einen manuell betätigbaren Schalter steuerbar ist.

3. Lager- und Transportvorrichtung nach Anspruch 2, **dadurch gekennzeichnet, dass** dem Strukturdämpfungskörper (23) eine oder mehrere parallel zueinander angeordnete, gleich große und gleich ausgebildete und gleichsinnig sich bewegende Stange oder Stangen (24, 25) mit Verzahnungen zugeordnet ist bzw. sind, die die Bewegung des Strukturdämpfungskörpers (23) beim Anstoßen des Transportfahrzeuges (2) über zugeordnete Zahnritzel (26, 27), eine horizontal angeordnete Welle (22) und dieser endseitig zugeordneter Ritzel (28, 29) überträgt, die ihrerseits mit Ritzel (20 bzw. 21) kämmen, die die Drehbewegung auf jeweils einem vertikal angeordneten Bolzen (14, 15) übertragen, die die Drehbewegung der Ritzel (28, 29 bzw. 20, 21) aus einer horizontalen Ebene in eine vertikale Hubbewegung in Richtung (X - Y) übertragen und dadurch die Rücklaufsperre (8) entweder in abgesenkter Stellung (X) oder in eine die Blockierstellung definierende Hubrichtung (Y) steuern.

4. Lager- und Transportvorrichtung nach Anspruch 3, **dadurch gekennzeichnet, dass** den verzahnten Bolzen (14, 15) jeweils ein Körper (11) zugeordnet ist, der den betreffenden Bolzen (14, 15) übergreift, wobei dem Körper (11) an seiner Oberseite ein Blechkörper (9) zugeordnet ist, der eine in Richtung auf das Transportfahrzeug (2) unter einem spitzen Winkel (α) zur Horizontalen geneigte Oberfläche (12) aufweist, auf die die Last bzw. die die Last tragende Palette (13) aufgleiten kann oder darüber bewegbar ist.

5. Lager- und Transportvorrichtung nach Anspruch 4, **dadurch gekennzeichnet, dass** der Rücklaufsperre (8) an jedem Endbereich ein Bolzen (33, 34) zugeordnet ist, der jeweils gegen eine vorgespannte Druckfeder (35, 36) verstellbar ist, wobei die Bolzen (33, 34) den Blechkörper (9) in vertikaler Richtung abstützen und den Blechkörper (9) nach Wegfall einer entweder manuellen oder durch das Transportfahrzeug (2) auf den Strukturdämpfungskörper (23) ausgelösten Schaltfunktion wieder in seine Blockierstellung (Y) nach oben drücken.

6. Lager- und Transportvorrichtung nach Anspruch 5, **dadurch gekennzeichnet, dass** der Blechkörper (9) an seinem dem Transportfahrzeug (2) zugekehrten Ende einen abgekröpften Aufschnitt aufweist, der nach unten gerichtet ist und sich über einen Schenkel des Betätigungskörpers (10) und dieser wiederum gegen den die verzahnten Bolzen (14 bzw. 15) übergreifenden Körper (11) abstützt (Fig. 16).

7. Lager- und Transportvorrichtung nach Anspruch 4 oder einem der vorhergehenden Ansprüche, **dadurch gekennzeichnet, dass** der Blechkörper (9) an seinem dem Transportfahrzeug (2) abgekehrten Endabschnitt mit einem abgekröpften Ende flächig auf einem Betätigungskörper (10) aufliegt und mit diesem verbunden ist.

8. Lager- und Transportvorrichtung nach Anspruch 7, **dadurch gekennzeichnet, dass** der Betätigungskörper (10) über eine Schraube mit dem jeweils zugeordneten verzahnten Bolzen (14, 15) lösbar verbunden ist.

9. Lager- und Transportvorrichtung nach Anspruch 3 oder einem der vorhergehenden Ansprüche, **dadurch gekennzeichnet, dass** die Hubbewegungen der verzahnten Stangen (24, 25) einerseits und die Hubbewegungen der verzahnten Bolzen (14, 15) andererseits entsprechend der vertikalen Hubbewegung (X bzw. Y) der Rücklaufsperre (8) begrenzt sind.

10. Lager- und Transportvorrichtung nach Anspruch 3 oder einem der vorhergehenden Ansprüche, **dadurch gekennzeichnet, dass** der Strukturdämpfungskörper (23) zusammen mit den verzahnten Stangen (24, 25) unterhalb der Ladefläche des Bahnhofs (3) angeordnet ist.
